# FASCICULE DE BREVET EUROPEEN

(11) **EP 3 822 621 B1**
(45) Date de publication et mention de la délivrance du brevet: **16.03.2022**
(21) Numéro de dépôt: 20207286.4
(22) Date de dépôt: 12.11.2020
(51) Int. Cl.: G01N 23/046

(54) **DISPOSITIF DE CONTRÔLE NON DESTRUCTIF**
VORRICHTUNG FÜR ZERSTÖRUNGSFREIE PRÜFUNG
DEVICE FOR NON DESTRUCTIVE TESTING

(30) Priorité: 18.11.2019 FR 1912838
(43) Date de publication de la demande: 19.05.2021
(73) Titulaire: RX-Solutions, 74650 Chavanod (FR); Tiama, 69390 Vourles (FR)
(72) Inventeur: VAUDAINE, François, 74600 Annecy (FR)
(74) Mandataire: Cabinet Poncet

(56) Documents cités:
- WO-A1-2013/185816
- US-A- 5 023 895
- Bruker: "SKYSCAN 1275 Fully Automated High Speed X-ray Microtomograph", , 1 janvier 2017 (2017-01-01), XP055727866, Extrait de l'Internet: URL:https://www.brechbuehler.ch/fileadmin/ user_upload/SKYSCAN_1275_Brochure_DOC-B76- EXS003_screen.pdf [extrait le 2020-09-04]

## Description

### DOMAINE TECHNIQUE DE L'INVENTION

La présente invention concerne le domaine du contrôle non destructif, et concerne plus particulièrement le domaine du contrôle non destructif par rayonnement ionisant (par exemple par rayons X, rayons alpha, rayons bêta, rayons gamma, ou par neutrons). Lors d'un tel contrôle, on place généralement un objet dans un faisceau de rayonnement ionisant pour en obtenir une ou plusieurs images au moyen d'un capteur linéaire ou matriciel.

Un contrôle non destructif par rayonnement ionisant permet d'inspecter les dimensions et la structure d'un objet pour y déceler d'éventuels défauts ou anomalies susceptibles par exemple de conduire à une défaillance.

Mais réaliser un tel contrôle pour des objets produits à la chaîne est difficilement envisageable pour des questions de temps et de sécurité.

L'utilisation d'un rayonnement ionisant nécessite de protéger les opérateurs afin de limiter leur exposition audit rayonnement. Pour ce faire, on connaît un dispositif de contrôle non destructif par rayonnement ionisant comprenant une source de rayonnement ionisant, ladite source émettant un rayonnement ionisant dans un caisson à parois aptes à confiner au moins partiellement ledit rayonnement ionisant. Par parois « aptes à confiner au moins partiellement le rayonnement ionisant », on entend désigner des parois en un matériau ou revêtues d'un matériau apte à atténuer et/ou absorber au moins partiellement le rayonnement ionisant. Par exemple, pour des rayons X, on a recours à un caisson à parois revêtues de plomb ou en plomb. On peut également avoir recours à des parois de caisson à épaisseur accrue (en acier par exemple), ou à des parois en un polymère chargé en plomb ou en tungstène.

Dans ledit caisson, la source de rayonnement ionisant est de préférence mobile (i.e. déplaçable selon un à trois axes) afin de mieux s'adapter aux divers objets à contrôler, pour cibler une zone plus particulière d'un objet, ou pour agrandir l'image générée sur l'écran (zoom).

Lorsque l'opérateur introduit un objet à contrôler dans le caisson, il ouvre généralement une trappe lui donnant accès à la cavité intérieure du caisson. Tel est le cas dans le dispositif commercialisé par la société BRUKER CORPORATION sous l'appellation commerciale « SKYSCAN 1275 », lequel est un dispositif de contrôle non destructif conforme au préambule de la revendication 1.

Pour protéger l'opérateur du rayonnement ionisant, une première solution consiste à éteindre la source de rayonnement ionisant. Toutefois, une succession d'extinctions et allumages présente l'inconvénient de réduire la durée de vie de la source de rayonnement ionisant, laquelle est très onéreuse. En outre, le temps d'attente nécessaire pour l'allumage de la source de rayonnement ionisant est relativement long (jusqu'à plusieurs dizaines de secondes pour un générateur de rayons X), de sorte que la cadence de contrôle obtenue est médiocre.

Une deuxième solution pour protéger l'opérateur consiste à prévoir, dans le caisson, un caisson secondaire contenant la source de rayonnement ionisant et également apte à confiner le rayonnement ionisant de la source. Ledit caisson secondaire est muni d'un volet qu'on peut sélectivement ouvrir pour effectuer le contrôle et fermer pour confiner le rayonnement ionisant dans le caisson secondaire lorsqu'un opérateur accède au volume intérieur du caisson. Une telle solution est toutefois complexe et onéreuse en raison du caisson secondaire et de son volet, sans parvenir à procurer une cadence de contrôle satisfaisante. En outre, cela rend très difficile, voire impossible, d'avoir une source de rayonnement ionisant mobile dans le caisson.

### EXPOSE DE L'INVENTION

Un problème proposé par la présente invention est de fournir un dispositif de contrôle non destructif par rayonnement ionisant permettant d'augmenter la cadence des contrôles tout en procurant une sécurité satisfaisante pour les opérateurs, et en limitant les risques de dégradation de la source de rayonnement ionisant.

Pour atteindre ces objets ainsi que d'autres, l'invention propose un dispositif de contrôle non destructif selon la revendication 1.

Un tel dispositif permet à un opérateur ou à un robot de charger sur le plateau un objet à contrôler pendant qu'un autre objet est en cours de contrôle dans le caisson. Le chargement est ainsi une opération effectuée en temps masqué, ce qui permet d'augmenter la cadence de traitement par le dispositif de contrôle.

L'ouverture latérale d'accès étant en permanence obstruée, de part et d'autre de l'axe longitudinal, par au moins une desdites quatre parois radiales, on peut maintenir en permanence active la source de rayonnement ionisant, sans pour autant compromettre la sécurité de l'opérateur. La durée de vie de la source de rayonnement ionisant n'est ainsi pas dégradée par des extinctions/allumages intermittents.

En outre, la source de rayonnement ionisant n'a pas besoin d'être confinée dans un caisson secondaire et peut ainsi être prévue mobile dans le caisson, pour y être déplaçable selon un à plusieurs axes (en translation et/ou rotation).

De préférence, dans un premier mode de réalisation, on peut prévoir que :
- le caisson est situé à l'écart du plateau selon l'axe longitudinal,
- l'ouverture de communication comprend un trou traversant réalisé dans une paroi du caisson,
- le plateau comporte au moins deux secteurs angulaires, en opposition l'un de l'autre, qui comportent chacun un socle de posage rapporté de façon détachable dans une lumière ménagée dans le secteur angulaire de plateau et disposé de façon à venir en correspondance dudit trou traversant par rotation du plateau autour de l'axe longitudinal,
- le dispositif de contrôle comporte des moyens de convoyage, aptes à détacher du plateau les socles de posage et à déplacer les socles de posage, selon une direction parallèle à l'axe longitudinal pour les amener dans le caisson à travers ledit trou traversant.

Un tel mode de réalisation présente une bonne compacité, avec le capot disposé sur la paroi supérieure ou sur la paroi inférieure du caisson, et l'ouverture de communication ménagée dans la paroi supérieure ou inférieure. Le capot peut être sensiblement en forme de cloche.

Avantageusement, les moyens de convoyage peuvent être aptes à entraîner en rotation les socles de posage autour d'une direction parallèle à l'axe longitudinal. Une telle rotation permet de faciliter l'exécution d'un contrôle de l'objet par tomographie.

De préférence, on peut prévoir que :
- chaque socle de posage comporte une section transversale non circulaire,
- chaque lumière ménagée dans le secteur angulaire de plateau présente une section transversale non circulaire sensiblement complémentaire à celle du socle de posage,
- les sections transversales du socle de posage et de la lumière correspondante sont conformées de telle sorte que, dans un plan sensiblement perpendiculaire à l'axe longitudinal :
   a. dans au moins une première orientation angulaire du socle par rapport à la lumière, le socle ne peut pas traverser le plateau via la lumière par un mouvement de translation selon l'axe longitudinal,
   b. dans au moins une deuxième orientation angulaire du socle par rapport à la lumière, le socle peut traverser le plateau via la lumière par un mouvement de translation selon l'axe longitudinal.

Un tel socle de posage est facilement manipulable par les moyens de convoyage, lesquels sont aptes à entraîner le socle en rotation autour d'une direction parallèle à l'axe longitudinal pour le disposer sélectivement en première ou deuxième orientation angulaire.

Avantageusement, dans un deuxième mode de réalisation, on peut prévoir que :
- la source de rayonnement ionisant émet son rayonnement selon un axe d'émission situé, selon l'axe longitudinal, entre le plateau et la paroi supérieure du capot,
- l'ouverture de communication comprend un trou traversant ménagé dans la paroi latérale du capot et procurant un accès à la cavité intérieure selon une deuxième direction radiale.

De préférence, la source de rayonnement ionisant peut émettre son rayonnement selon un axe d'émission sensiblement perpendiculaire à la deuxième direction radiale. Une telle disposition contribue à limiter efficacement les risques d'une propagation directe du rayonnement à travers l'ouverture de communication.

Avantageusement, dans une première variante du deuxième mode de réalisation, on peut prévoir que :
- le plateau comporte au moins deux secteurs angulaires, en opposition l'un de l'autre, qui comportent chacun un socle de posage,
- il comporte des moyens de déplacement, aptes à déplacer les socles de posage à l'écart de l'axe longitudinal pour les amener dans le caisson à travers le trou traversant ménagé dans la paroi latérale du capot.

Les moyens de déplacement permettent d'amener l'objet à contrôler à l'emplacement adéquat dans le rayonnement ionisant.

De préférence, les moyens de déplacement peuvent être aptes à entraîner en rotation les socles de posage autour d'une direction parallèle à l'axe longitudinal. Une telle rotation permet de faciliter l'exécution d'un contrôle de l'objet par tomographie.

Avantageusement, dans une deuxième variante du deuxième mode de réalisation, on peut prévoir que :
- la source de rayonnement ionisant émet son rayonnement selon un faisceau d'émission situé, selon l'axe longitudinal, au moins en partie en correspondance d'une portion du plateau,
- le plateau comporte au moins deux secteurs angulaires, en opposition l'un de l'autre, qui comportent chacun un socle de posage.

Dans une telle variante, on effectue le contrôle de l'objet sans avoir à déplacer celui-ci hors du plateau, ce qui procure un gain de temps. Et la structure du dispositif de contrôle est simple.

De préférence, le dispositif de contrôle peut comporter des moyens d'entraînement en rotation, aptes à entraîner en rotation les socles de posage autour d'une direction parallèle à l'axe longitudinal. Une telle rotation permet de faciliter l'exécution d'un contrôle de l'objet par tomographie.

Avantageusement, la source de rayonnement ionisant peut émettre des rayons X.

Selon un autre aspect de la présente invention, il est proposé l'utilisation d'un dispositif de contrôle tel que décrit précédemment pour le contrôle d'objets en verre, de préférence par tomographie.

De préférence, les objets en verre sont des conteneurs creux, par exemple des bouteilles.

Pour gagner du temps lors des opérations de contrôle, on peut avantageusement réaliser des images d'un objet à contrôler reposant sur un socle de posage pendant que ledit socle de posage est amené dans le caisson.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue schématique en perspective d'une première variante d'un premier mode de réalisation de dispositif de contrôle selon l'invention ;
[Fig.2] La figure 2 est une vue schématique de dessus et en coupe du dispositif de contrôle de la figure 1 ;
[Fig.3] La figure 3 est une vue schématique en perspective du dispositif de contrôle de la figure 1, lors d'une première étape d'utilisation ;
[Fig.4] La figure 4 est une vue schématique de côté du dispositif de contrôle de la figure 3 ;
[Fig.5] La figure 5 est une vue schématique de côté du dispositif de contrôle de la figure 1, lors d'une deuxième étape d'utilisation ;
[Fig.6] La figure 6 est une vue schématique en perspective du dispositif de contrôle de la figure 1, lors d'une troisième étape d'utilisation ;
[Fig.7] La figure 7 est une vue schématique de côté du dispositif de contrôle de la figure 6 ;
[Fig.8] La figure 8 est une vue de détail et de dessus d'un socle de posage du plateau du dispositif de contrôle de la figure 1 ;
[Fig.9] La figure 9 est une vue de détail et de dessus d'une lumière ménagée dans le plateau du dispositif de contrôle de la figure 1 ;
[Fig.10] La figure 10 est une vue de détail et de dessus illustrant le socle de posage de la figure 8 disposé en une première orientation dans la lumière de la figure 9 ;
[Fig.11] La figure 11 est une vue de détail et de dessus illustrant le socle de posage de la figure 8 disposé en une deuxième orientation dans la lumière de la figure 9 ;
[Fig.12] La figure 12 est une vue schématique et de côté du socle de posage de la figure 8 et du plateau avant élévation du socle de posage par des moyens de convoyage ;
[Fig.13] La figure 13 est une vue schématique et de côté du socle de posage de la figure 8 et du plateau après élévation du socle de posage par les moyens de convoyage ;
[Fig.14] La figure 14 est une vue schématique et de côté du socle de posage de la figure 8 et du plateau après rotation du socle de posage par les moyens de convoyage ;
[Fig.15] La figure 15 est une vue schématique et de côté du socle de posage de la figure 8 et du plateau après abaissement du socle de posage par les moyens de convoyage ;
[Fig.16] La figure 16 est une vue schématique en perspective d'une deuxième variante du premier mode de réalisation de dispositif de contrôle selon l'invention ;
[Fig.17] La figure 17 est une vue schématique et de dessous du dispositif de contrôle de la figure 16 ;
[Fig.18] La figure 18 est une vue schématique en perspective d'une première variante d'un deuxième mode de réalisation de dispositif de contrôle selon l'invention ;
[Fig.19] La figure 19 est une vue schématique en coupe et de dessus du dispositif de contrôle de la figure 18 ;
[Fig.20] La figure 20 est une vue schématique en perspective d'une deuxième variante du deuxième mode de réalisation de dispositif de contrôle selon l'invention ;
[Fig.21] La figure 21 est une vue schématique en coupe et de dessus du dispositif de contrôle de la figure 20.

### DESCRIPTION DES MODES DE REALISATION PREFERES

Lorsque des références numériques identiques sont utilisées dans plusieurs modes de réalisation et/ou variantes de l'invention, ces références numériques désignent des éléments identiques ou similaires dans chacun des modes de réalisation.

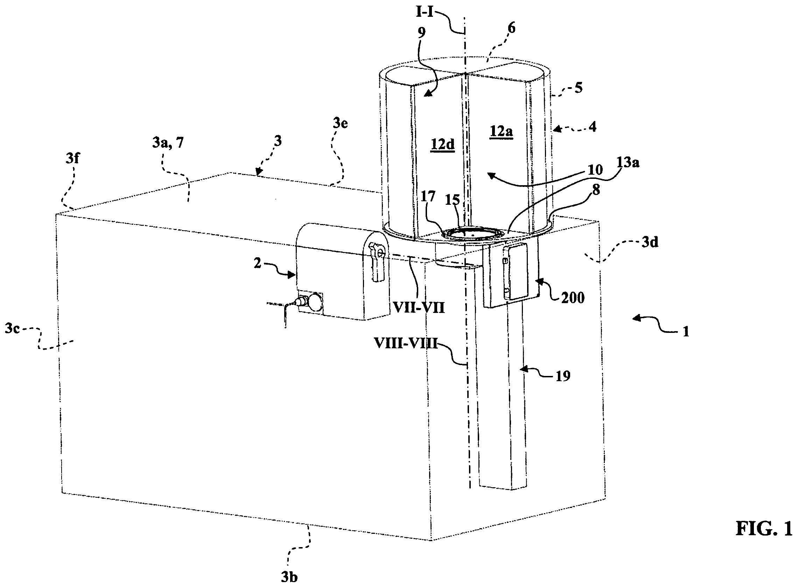

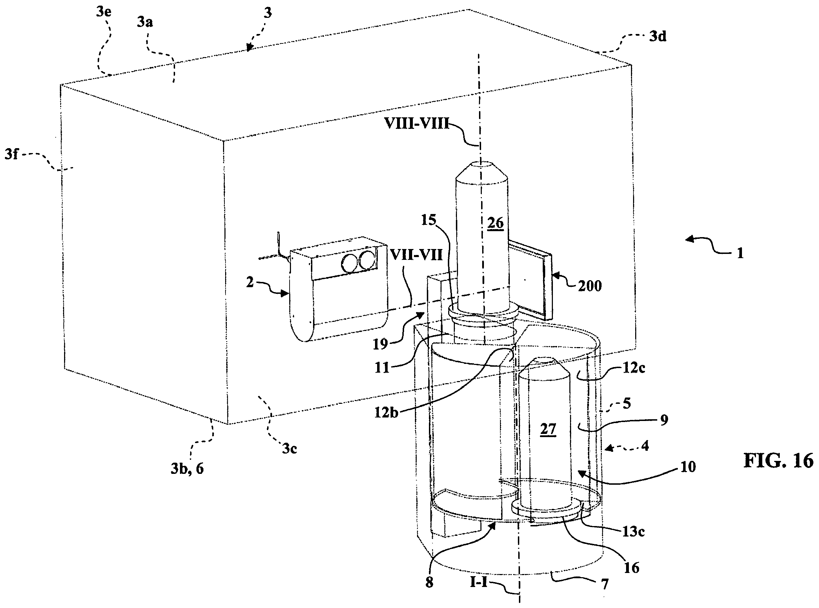

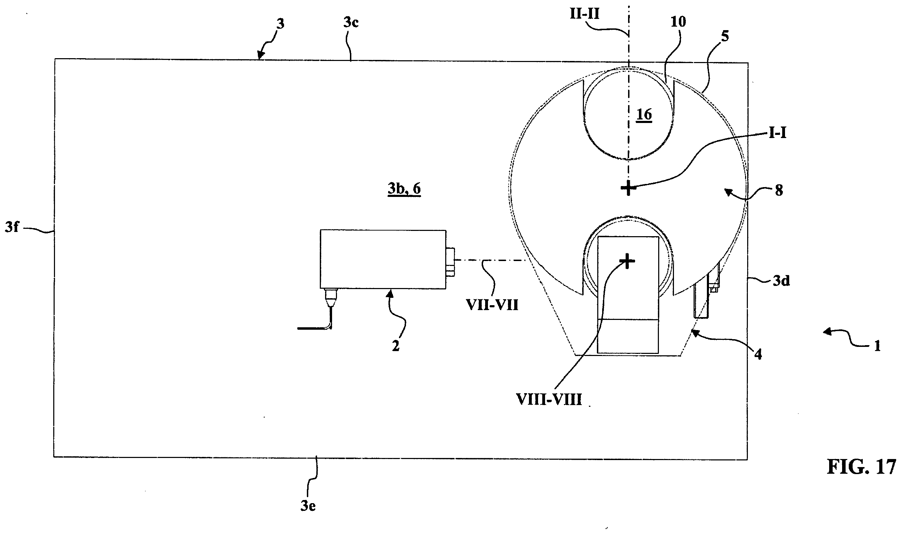

Les figures 1 à 7, 16 et 17 illustrent un premier mode de réalisation de l'invention. Les figures 1 à 7 ont trait à une première variante tandis que les figures 16 et 17 ont trait à une deuxième variante dudit premier mode de réalisation.

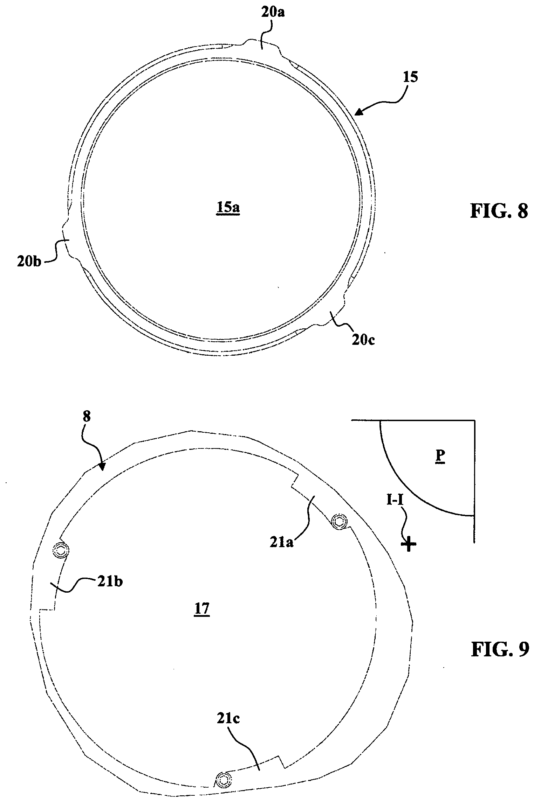

Les figures 8 à 15 illustrent des détails de construction et de fonctionnement qui sont utilisés dans la première variante du premier mode de réalisation.

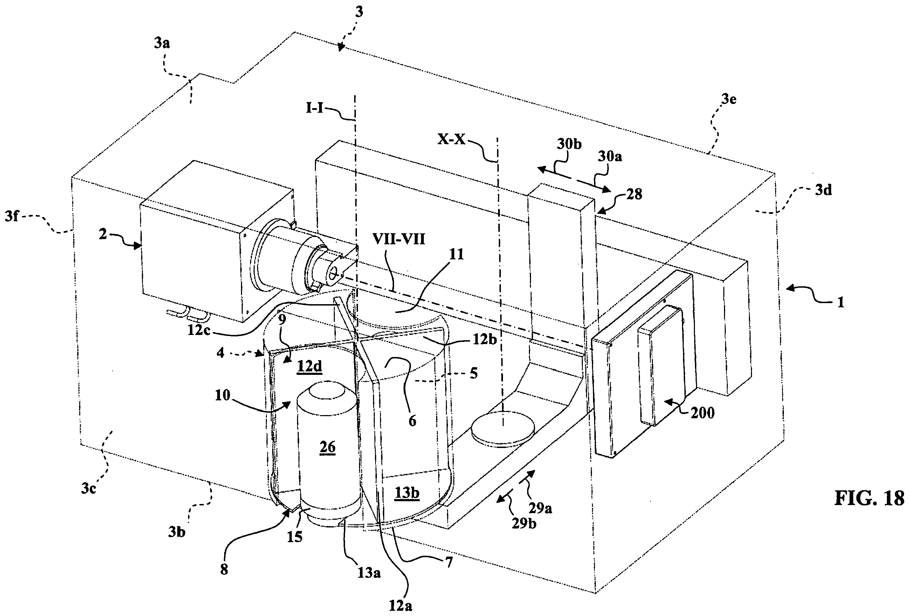

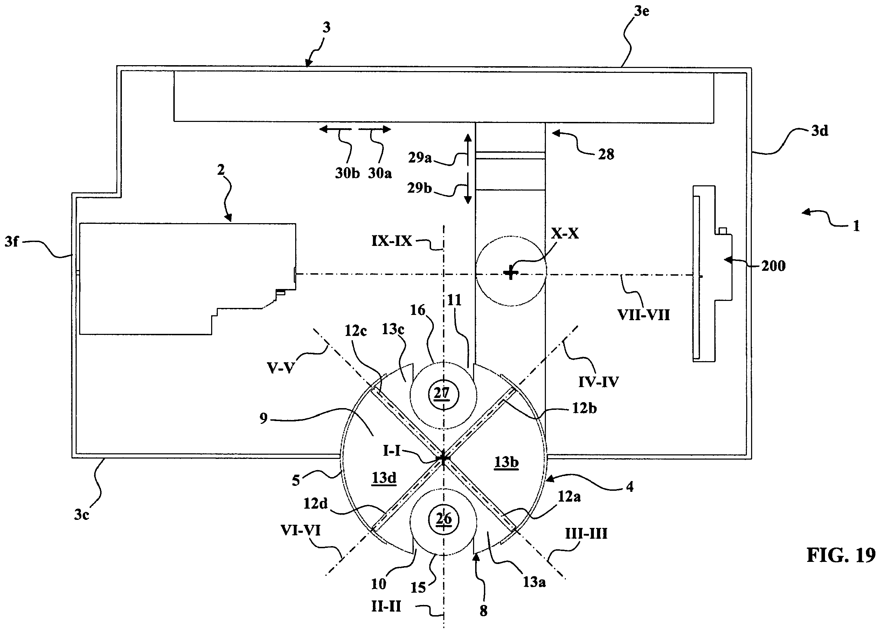

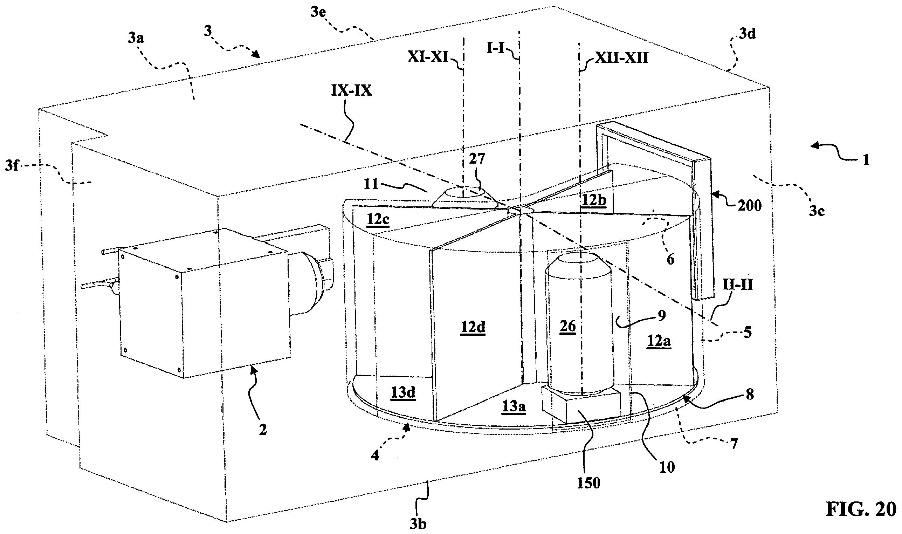

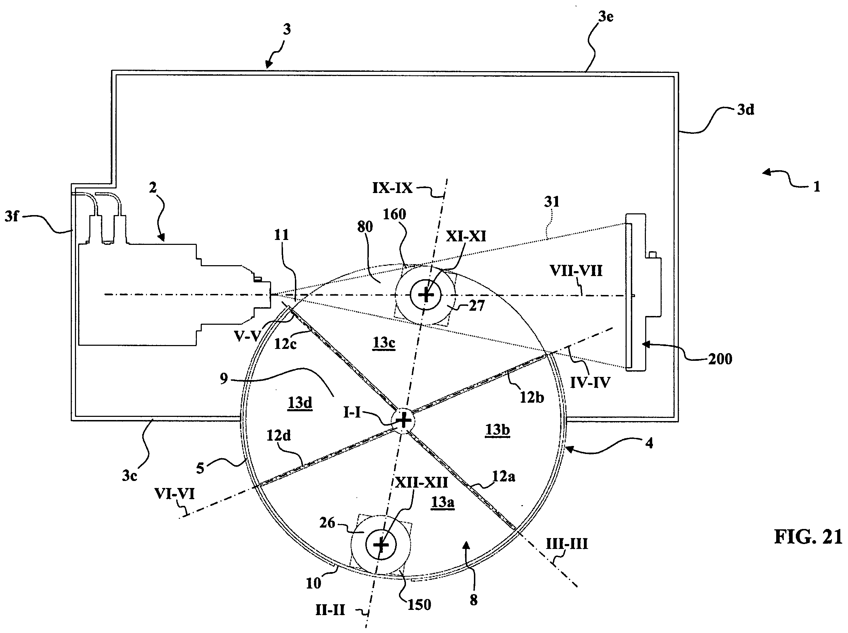

Les figures 18 à 21 illustrent un deuxième mode de réalisation de l'invention. Les figures 18 et 19 ont trait à une première variante tandis que les figures 20 et 21 ont trait à une deuxième variante dudit deuxième mode de réalisation.

Dans tous les modes de réalisation et leurs variantes, le dispositif de contrôle 1 non destructif par rayonnement ionisant comprend une source 2 de rayonnement ionisant, émettant un rayonnement ionisant dans un caisson 3 à parois 3a à 3f aptes à confiner au moins partiellement ledit rayonnement ionisant. Pour faciliter la compréhension du lecteur, les parois 3a à 3f du caisson 3 ont été représentées en transparence.

La source 2 émet son rayonnement en direction d'un écran 200 (capteur) permettant l'acquisition d'une ou plusieurs images d'un objet à contrôler placé dans le faisceau du rayonnement ionisant (par exemple une radiographie lorsque la source émet des rayons X).

Le dispositif de contrôle 1 comprend également un capot 4 s'étendant le long d'un axe longitudinal I-I, présentant une section transversale sensiblement circulaire centrée sur l'axe longitudinal I-I, et comprenant une paroi latérale 5, une paroi supérieure 6 et une paroi inférieure 7 aptes à confiner au moins partiellement ledit rayonnement ionisant. Pour faciliter la compréhension du lecteur, les parois 5 à 7 du capot 4 ont été représentées en transparence.

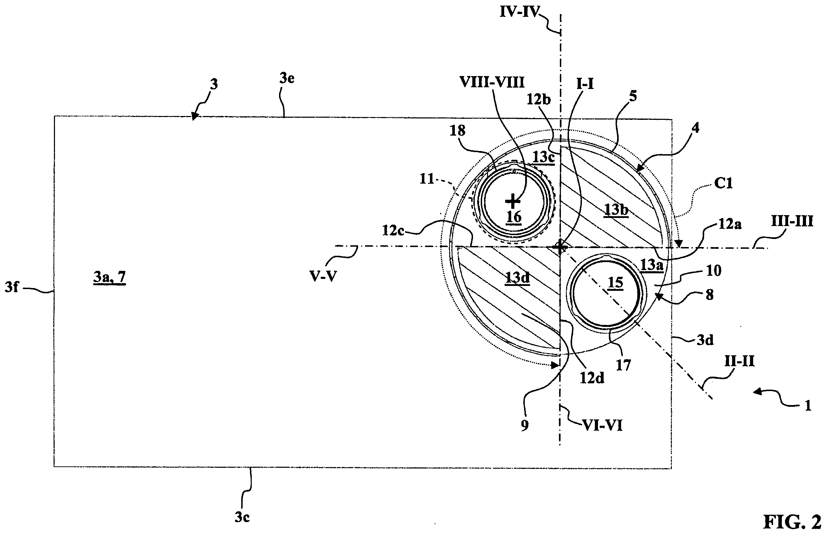

Sur les figures 2, 19 et 21, la paroi latérale 5 a une section transversale circulaire. Sur la figure 17, la paroi latérale 5 a une section transversale sensiblement circulaire.

Le dispositif de contrôle 1 comprend également :
- un plateau 8 sous forme de disque, rotatif autour de l'axe longitudinal I-I par rapport au capot 4, une cavité intérieure 9 étant définie entre le plateau 8, la paroi latérale 5 et les parois supérieure 6 et inférieure 7 du capot 4,
- une ouverture latérale d'accès 10, ménagée dans la paroi latérale 5 du capot 4 et procurant un accès à la cavité intérieure 9 selon une première direction radiale II-II,
- une ouverture de communication 11 entre le caisson 3 contenant la source 2 de rayonnement ionisant et la cavité intérieure 9, disposée de façon sensiblement diamétralement opposée à l'ouverture latérale d'accès 10 par rapport à l'axe longitudinal I-I,
- au moins quatre parois radiales 12a à 12d s'étendant respectivement depuis le plateau 8 selon l'axe longitudinal I-I et selon des directions radiales III-III à VI-VI respectives, définissant entre elles au moins quatre secteurs angulaires 13a à 13d de plateau 8, lesdites parois radiales 12a à 12d comportant un matériau apte à absorber au moins partiellement le rayonnement ionisant.

Le plateau 8 présente un diamètre sensiblement égal au diamètre intérieur du capot 4.

On voit plus particulièrement sur les figures 2, 19 et 21 que, dans le dispositif de contrôle 1 de la figure 1, les secteurs angulaires 13b et 13d ménagés entre parois radiales 12a et 12b d'une part, et 12c et 12d d'autre part, sont remplis d'un matériau apte à absorber au moins partiellement le rayonnement ionisant. En alternative, les secteurs angulaires 13b et 13d peuvent être creux en étant définis par des parois radiales 12a et 12b d'une part, et 12c et 12d d'autre part, aptes à absorber au moins partiellement le rayonnement ionisant.

Dans la première variante du premier mode de réalisation illustrée sur la figure 1, la paroi inférieure 7 du capot 4 coïncide avec la paroi supérieure 3a du caisson 3. En alternative, si le plateau 8 est en un matériau apte à confiner au moins partiellement ledit rayonnement ionisant, le plateau 8 peut constituer la paroi inférieure 7 du capot 4 et une partie de la paroi supérieure 3a du caisson 3.

On voit plus particulièrement sur la figure 2 que les parois radiales 12a à 12d, l'ouverture latérale d'accès 10 et l'ouverture de communication 11 sont agencées de façon que le passage entre l'ouverture latérale d'accès 10 et l'ouverture de communication 11 est obstrué par lesdites parois radiales 12a-12d quelle que soit la position angulaire du plateau 8 autour de l'axe longitudinal I-I. Ainsi, on piège et confine efficacement le rayonnement ionisant qui pourrait sortir du caisson 3 dans la cavité intérieure 9 (via l'ouverture de communication 11), sans que celui-ci ne puisse passer directement par l'ouverture latérale d'accès 10.

La source 2 de rayonnement ionisant émet son rayonnement selon un axe d'émission VII-VII (figure 1). Dans le cas où la source 2 est un générateur de rayons X, l'émission se fait sous la forme d'un cône, et l'axe VII-VII est alors l'axe central dudit cône. L'axe d'émission VII-VII est sensiblement perpendiculaire à l'axe longitudinal I-I.

De façon plus spécifique, dans le dispositif de contrôle 1 de la figure 1 :
- le caisson 3 est situé à l'écart du plateau 8 selon l'axe longitudinal I-I (le plateau 8 est situé au-dessus du caisson 3),
- l'ouverture de communication 11 comprend un trou traversant réalisé dans la paroi supérieure du caisson 3,
- le plateau 8 comporte deux secteurs angulaires 13a et 13c, en opposition l'un de l'autre, qui comportent chacun un socle de posage 15 ou 16 rapporté de façon détachable dans une lumière 17 ou 18 ménagée dans le secteur angulaire 13a ou 13c de plateau 8 et disposé de façon à venir en correspondance dudit trou traversant de l'ouverture de communication 11 par rotation du plateau 8 autour de l'axe longitudinal I-I.

Dans le dispositif de contrôle 1 de la figure 1 :
- le plateau 8 présente un diamètre de 570 mm environ ;
- les secteurs angulaires 13a-13d définis par les parois radiales 12a à 12d sont de 90° environ ;
- la paroi latérale 5 présente un diamètre intérieur de 580 mm environ, une hauteur selon l'axe longitudinal I-I de 550 mm environ, et se développe selon un secteur angulaire C1 de 270° environ autour de l'axe longitudinal I-I ;
- l'ouverture latérale d'accès 10 se développe selon un secteur angulaire de 90° environ autour de l'axe longitudinal I-I ;
- l'ouverture de communication 11 est diamétralement opposée à l'ouverture latérale d'accès 10 par rapport à l'axe longitudinal I-I et présente un diamètre de 215 mm environ ;
- les socles de posage 15 et 16 présentent un diamètre de 195 mm environ.

Le dispositif de contrôle 1 comporte en outre des moyens de convoyage 19, aptes à détacher du plateau 8 les socles de posage 15 et 16, et à déplacer les socles de posage 15 et 16, selon une direction VIII-VIII parallèle à l'axe longitudinal I-I pour les amener dans le caisson 3 à travers ledit trou traversant de l'ouverture de communication 11.

Pour faciliter la réalisation d'une tomographie, les moyens de convoyage 19 sont aptes à entraîner en rotation les socles de posage 15 et 16 autour de la direction VIII-VIII parallèle à l'axe longitudinal I-I.

Les figures 8 à 11 illustrent plus en détail la forme et la coopération du socle de posage 15 avec la lumière 17, étant observé que les socles de posage 15 et 16 sont identiques, et que les lumières 17 et 18 sont identiques.

Sur la figure 8 est illustré, en vue de dessus, le socle de posage 15. Celui-ci comporte une section transversale non circulaire présentant en particulier trois excroissances radiales 20a à 20c s'étendant à l'écart du centre du socle de posage 15. La face supérieure 15a du socle de posage 15 est adaptée pour recevoir en appui un objet à contrôler (ici elle est plane).

Sur la figure 9 est illustrée, en vue de dessus, la lumière 17 ménagée dans le plateau 8. Celle-ci comporte également une section transversale non circulaire sensiblement complémentaire à celle du socle de posage 15. Elle présente en particulier trois ailettes radiales 21a à 21c orientées vers le centre de la lumière 17.

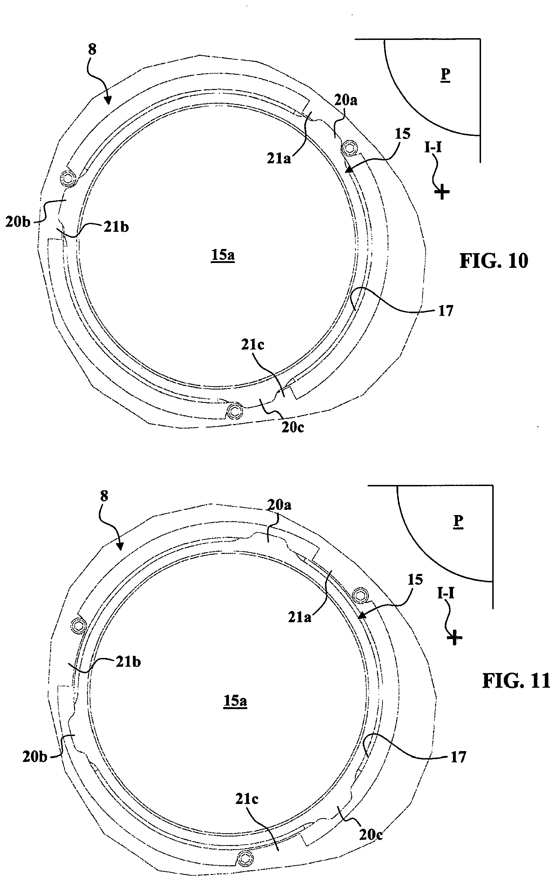

On voit plus particulièrement sur les figures 10 et 11 que les sections transversales du socle de posage 15 et de la lumière 17 correspondante sont conformées de telle sorte que, dans un plan P sensiblement perpendiculaire à l'axe longitudinal I-I :
- dans au moins une première orientation angulaire (figure 10) du socle de posage 15 par rapport à la lumière 17, le socle de posage 15 ne peut pas traverser le plateau 8 via la lumière 17 par un mouvement de translation selon l'axe longitudinal I-I,
- dans au moins une deuxième orientation angulaire (figure 11) du socle de posage 15 par rapport à la lumière 17, le socle de posage 15 peut traverser le plateau 8 via la lumière 17 par un mouvement de translation selon l'axe longitudinal I-I.

Il s'agit en d'autres termes d'une coopération de type « baïonnettes » :
- dans la première orientation illustrée sur la figure 10, les excroissances radiales 20a à 20c du socle de posage 15 reposent sur les ailettes radiales 21a à 21c, ce qui empêche le socle de posage 15 de passer à travers le plateau 8 ;
- dans la deuxième orientation illustrée sur la figure 11, les excroissances radiales 20a à 20c du socle de posage 15 ne reposent plus sur les ailettes radiales 21a à 21c, de sorte que le socle de posage 15 peut passer à travers le plateau 8.

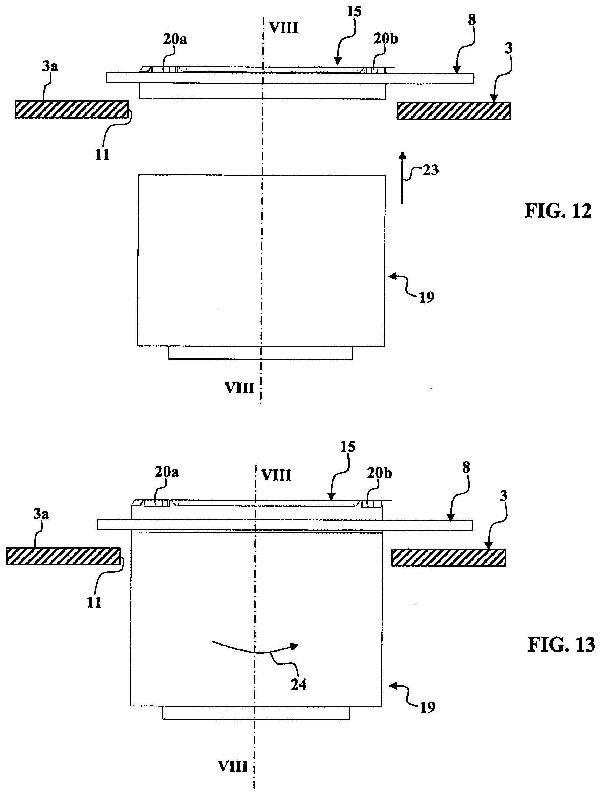

Le fonctionnement des moyens de convoyage 19 pour détacher du plateau 8 le socle de posage 15, puis le déplacer selon la direction VIII-VIII pour l'amener dans le caisson 3 à travers ledit trou traversant de l'ouverture de communication 11, va désormais être explicité au moyen des figures 12 à 15. Le fonctionnement est identique pour le socle de posage 16.

Sur la figure 12, le socle de posage 15 est en première orientation : les excroissances radiales 20a à 20c du socle de posage 15 reposent sur les ailettes radiales 21a à 21c, ce qui empêche le socle de posage 15 de passer à travers le plateau 8 et l'ouverture de communication 11 ménagée dans la paroi supérieure 3a du caisson 3 (qui coïncide ici avec la paroi inférieure du capot 4).

Les moyens de convoyage 19 sont alors élevés selon la direction VIII-VIII, selon un mouvement de translation illustré par la flèche 23, et ce jusqu'à soulever légèrement le socle de posage 15 comme illustré sur la figure 13. Les excroissances radiales 20a à 20c du socle de posage 15 ne reposent alors plus sur les ailettes 21a à 21c du plateau 8.

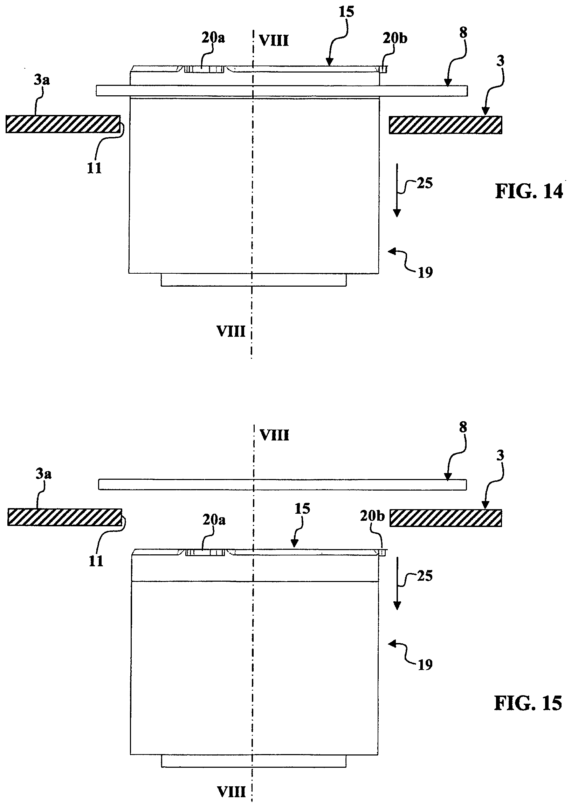

Les moyens de convoyage 19 entraînent alors en rotation le socle de posage 15 autour de la direction VIII-VIII selon un mouvement illustré par la flèche 24 pour parvenir dans la position illustrée sur la figure 14. Les excroissances radiales 20a à 20c du socle de posage 15 ne sont plus situées en correspondance des ailettes radiales 21a à 21c (voir figure 9).

Les moyens de convoyage 19 abaissent ensuite le socle de posage 15 selon la direction VIII-VIII, selon un mouvement de translation illustré par la flèche 25, ce qui permet d'amener le socle de posage 15 dans le caisson 3 à travers ledit trou traversant de l'ouverture de communication 11 (figure 15).

Il doit être noté que, pour faciliter et fiabiliser l'entraînement en rotation des socles de posage 15 et 16 par les moyens de convoyage 19, les socles de posage 15 et 16 et les moyens de convoyage 19 peuvent présenter des interfaces interpénétrantes procurant une indexation en rotation des socles de posage 15 et 16 autour de la direction VIII-VIII.

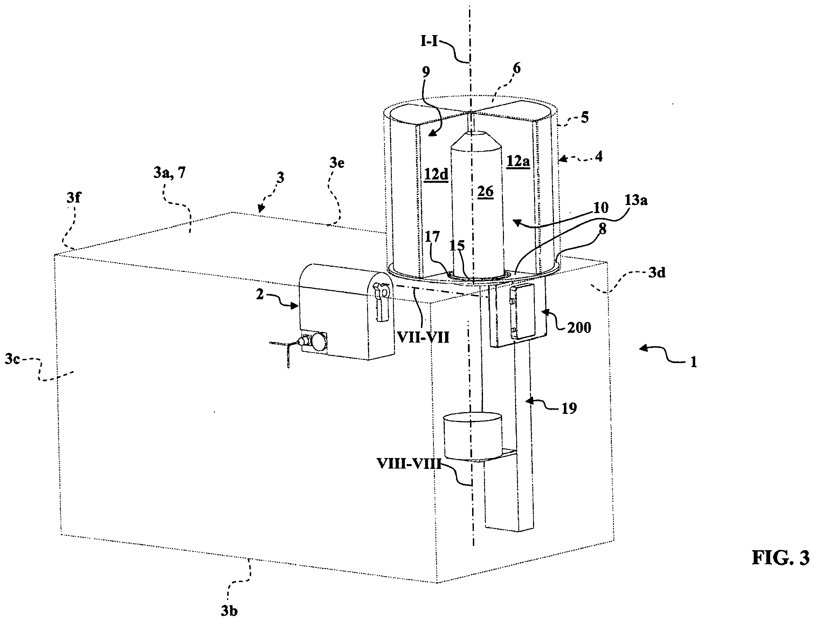

Le fonctionnement de la première variante du premier mode de réalisation de dispositif de contrôle 1 va désormais être explicité au moyen des figures 3 à 7.

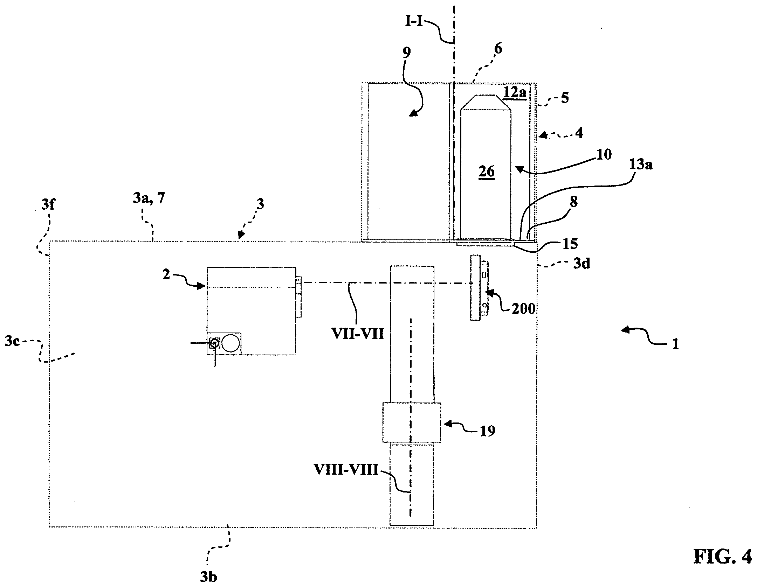

Lors d'une première étape illustrée sur les figures 3 et 4, l'opérateur pose un premier objet 26 à contrôler sur le socle de posage 15 qui est accessible à travers l'ouverture latérale d'accès 10 du capot 4. Le socle de posage 15 est dans sa première orientation angulaire par rapport à la lumière 17 ménagée dans le plateau 8.

Les moyens de convoyage 19 sont ici à l'écart du plateau 8, dans une position qui peut être appelée « position basse ».

Le plateau 8 est alors mis en rotation autour de l'axe longitudinal I-I selon un demi-tour. On amène ainsi le socle de posage 15 en correspondance, selon l'axe longitudinal I-I, de l'ouverture de communication 11. De son côté, le socle de posage 16 devient accessible à travers l'ouverture latérale d'accès 10 du capot 4 en prenant la place à laquelle était précédemment disposé le socle de posage 15.

Lors de la rotation du plateau 8, l'ouverture latérale d'accès 10, vue selon la première direction radiale II-II (figure 2), est en permanence obstruée, de part et d'autre de l'axe longitudinal I-I, par au moins une desdites quatre parois radiales 12a à 12d, de façon à piéger et confiner dans le capot 4 le rayonnement ionisant qui pourrait sortir du caisson 3 dans la cavité intérieure 9 (via l'ouverture de communication 11). La partie de rayonnement ionisant qui parvient dans le capot 4 ne peut au pire passer par l'ouverture latérale d'accès 10 que par un certain nombre de ricochets (par absorption et réémission) sur les parois (latérale 5, supérieure 6, et inférieure 7) du capot 4 et sur les parois radiales 12a à 12d et est en conséquence suffisamment atténuée pour ne pas présenter un caractère dangereux pour l'opérateur.

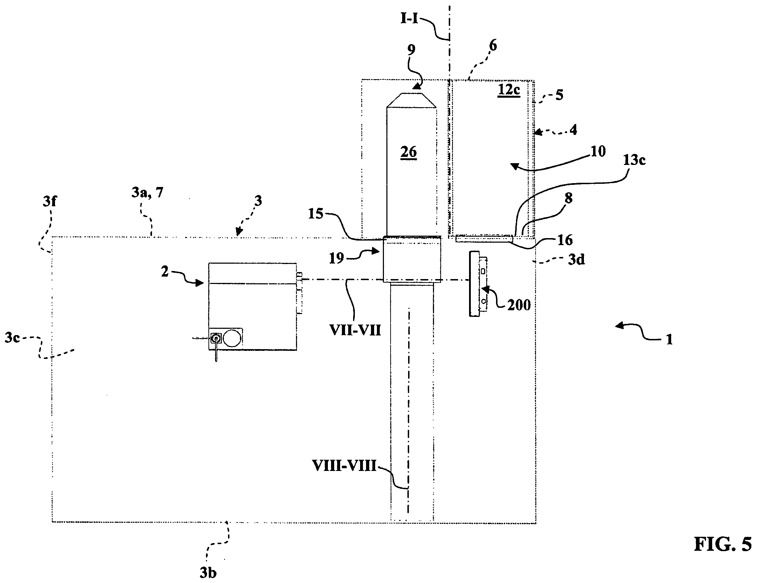

Les moyens de convoyage 19 sont ultérieurement (ou simultanément à la rotation du plateau 8) déplacés vers le plateau 8 selon la direction VIII-VIII jusqu'à venir au contact du socle de posage 15. On se trouve alors dans la position illustrée sur la figure 5.

Les moyens de convoyage 19 sont alors pilotés de façon à détacher du plateau 8 le socle de posage 15 et à le déplacer (ainsi que le premier objet 26) dans le caisson 3 à travers l'ouverture de communication, de la façon décrite précédemment en lien avec les figures 8 à 11.

Selon une première possibilité, on effectue le contrôle du premier objet 26 une fois les moyens de convoyage 19 en position basse. Selon une deuxième possibilité, on effectue le contrôle du premier objet 26 lors du déplacement des moyens de convoyage 19 vers leur position basse, ce qui permet de raccourcir le temps de cycle. Quelle que soit la solution retenue, les moyens de convoyage 19 peuvent entraîner le socle de posage 15 (et donc le premier objet 26) en rotation autour de la direction VIII-VIII, ce qui permet d'effectuer par exemple une tomographie du premier objet 26.

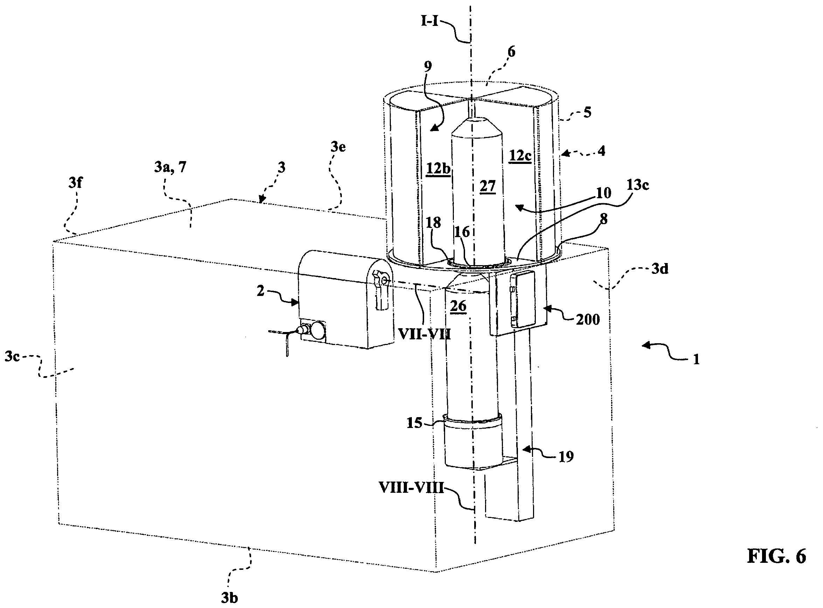

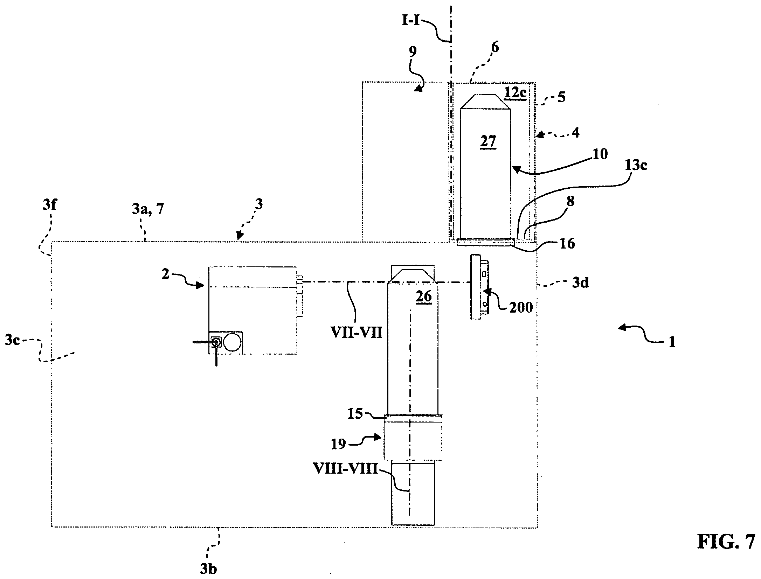

Pendant l'introduction du premier objet 26 et son contrôle dans le caisson 3, l'opérateur peut disposer un deuxième objet 27 sur le socle de posage 16, comme illustré sur les figures 6 et 7.

Après contrôle du premier objet 26, les moyens de convoyage 19 ramènent le socle de posage 15 hors du caisson 3 en le faisant passer à travers l'ouverture de communication 11 et à travers le plateau 8, puis le solidarise au plateau 8 selon un processus inverse à celui décrit précédemment au moyen des figures 8 à 11.

Le plateau 8 est alors à nouveau mis en rotation autour de l'axe longitudinal I-I selon un demi-tour. On amène ainsi le socle de posage 16 portant le deuxième objet 27 en correspondance de l'ouverture de communication 11 selon l'axe longitudinal I-I, tandis que le socle de posage 15 prend la place à laquelle était précédemment disposé le socle de posage 16, le premier objet 26 devenant accessible à travers l'ouverture latérale d'accès 10 du capot 4.

Lors de cette rotation, la source 2 de rayonnement reste en fonctionnement, mais l'opérateur reste en permanence protégé.

Le premier objet 26 est ensuite extrait de la cavité intérieure 9 par l'opérateur. Si son contrôle s'est révélé satisfaisant, le premier objet 26 est conservé. Dans la négative, le premier objet 26 est mis au rebut.

L'opérateur peut ensuite introduire un nouvel objet à contrôler sur le socle de posage 15. Pendant ce temps, le deuxième objet 27 est contrôlé à l'intérieur du caisson 3.

La deuxième variante du premier mode de réalisation illustrée sur les figures 16 et 17 se distingue de la première variante du premier mode de réalisation (figures 1 à 7) par la disposition relative du caisson 3 et du capot 4. En l'espèce, le capot 4 est situé en-dessous du caisson 3.

Ainsi, la paroi supérieure 6 du capot 4 coïncide avec la paroi inférieure 3b du caisson 3, et l'ouverture de communication 11 est ménagée dans la paroi inférieure 3b du caisson 3.

Dans le dispositif de contrôle 1 de la figure 16 :
- le plateau 8 présente un diamètre de 570 mm environ ;
- les secteurs angulaires 13a-13d définis par les parois radiales 12a à 12d sont de 90° environ ;
- la paroi latérale 5 présente un diamètre intérieur de 580 mm environ et une hauteur selon l'axe longitudinal I-I de 730 mm environ ;
- l'ouverture latérale d'accès 10 se développe selon un secteur angulaire de 50° environ autour de l'axe longitudinal I-I ;
- l'ouverture de communication 11 est diamétralement opposée à l'ouverture latérale d'accès 10 par rapport à l'axe longitudinal I-I et présente une section sensiblement rectangulaire de 215 mm environ de large et 330 mm environ de long.

Comme il est plus particulièrement visible sur la figure 17, la paroi latérale 5 du capot 4 s'étend sensiblement selon un arc d'environ 270 degrés autour de l'axe longitudinal I-I, conférant ainsi au capot 4 une section transversale sensiblement circulaire.

Le fonctionnement de la deuxième variante du premier mode de réalisation est très similaire à celui de la première variante du premier mode de réalisation. Il y a toutefois quelques différences :
- une première différence est que, pour pénétrer dans le caisson 3, les socles de posage 15 et 16 portant les objets à contrôler sont déplacés par les moyens de convoyage 19 dans un sens opposé (vers une « position haute ») selon la direction VIII-VIII ;
- une deuxième différence est que le détachement des socles de posage 15 et 16 du plateau 8 ne nécessite pas une rotation des socles 15 et 16 autour de la direction VIII-VIII. Une simple translation des socles 15 et 16, provoquée par les moyens de convoyage 19 en déplacement vers leur position haute, suffit à les détacher du plateau 8.

Dans la deuxième variante du premier mode de réalisation, on peut également effectuer le contrôle des objets pendant ou après le déplacement des moyens de convoyage 19 vers leur position haute. Et les moyens de convoyage 19 peuvent aussi entraîner les socles de posage 15 et 16 en rotation autour de la direction VIII-VIII pour effectuer une tomographie des objets à contrôler.

Sur les figures 18 à 21 sont illustrées deux variantes d'un deuxième mode de réalisation de l'invention.

Le deuxième mode de réalisation se distingue en ce que :
- la source 2 de rayonnement ionisant émet son rayonnement selon un axe d'émission VII-VII situé, selon l'axe longitudinal I-I, entre le plateau 8 et la paroi supérieure 6 du capot 4,
- l'ouverture de communication 11 comprend un trou traversant ménagé dans la paroi latérale 5 du capot 4 et procurant un accès à la cavité intérieure 9 selon une deuxième direction radiale IX-IX.

De façon plus particulière, on voit sur les figures 19 et 21 que le capot 4 est disposé dans une paroi latérale 3c du caisson 3, et que la paroi latérale 5 du capot 4 se prolonge dans le caisson 3. La paroi latérale 5 du capot 4 a une section transversale circulaire.

La source 2 de rayonnement ionisant émet son rayonnement selon un axe d'émission VII-VII sensiblement perpendiculaire à la deuxième direction radiale IX-IX. Une telle disposition contribue à limiter efficacement les risques d'une propagation directe du rayonnement à travers l'ouverture de communication 11 et l'ouverture latérale d'accès 10.

Le plateau 8 comporte également deux secteurs angulaires 13a et 13c, en opposition l'un de l'autre, qui comportent chacun un socle de posage 15 ou 16.

Dans la première variante illustrée sur les figures 18 et 19, des moyens de déplacement 28 permettent de déplacer les socles de posage 15 et 16 à l'écart de l'axe longitudinal I-I pour les amener dans le caisson 3 à travers le trou traversant de l'ouverture de communication 11 ménagée dans la paroi latérale 5 du capot 4.

Les moyens de déplacement 28 permettent plus particulièrement de déplacer les socles de posage 15 et 16 selon des mouvements illustrés par les flèches 29a, 29b, 30a et 30b.

Dans le dispositif de contrôle 1 de la figure 18 :
- le plateau 8 présente un diamètre de 300 mm environ ;
- les secteurs angulaires 13a-13d définis par les parois radiales 12a à 12d sont de 90° environ ;
- la paroi latérale 5 présente un diamètre intérieur de 310 mm environ et une hauteur selon l'axe longitudinal I-I de 290 mm environ, et se développe selon deux secteurs angulaires de 110° environ autour de l'axe longitudinal I-I ;
- l'ouverture latérale d'accès 10 se développe selon un secteur angulaire de 70° environ autour de l'axe longitudinal I-I ;
- l'ouverture de communication 11 est diamétralement opposée à l'ouverture latérale d'accès 10 par rapport à l'axe longitudinal I-I et se développe selon un secteur angulaire de 70° environ autour de l'axe longitudinal I-I.

Le fonctionnement de cette première variante du deuxième mode de réalisation est similaire à celui du premier mode de réalisation explicité précédemment, notamment en ce qui concerne le plateau 8 et sa rotation autour de l'axe longitudinal I-I pour permettre le chargement d'un deuxième objet 27 lorsqu'un premier objet 26 est en cours de contrôle, tout en protégeant l'opérateur contre les radiations.

L'opérateur commence par poser un premier objet 26 à contrôler sur le socle de posage 15 qui est accessible à travers l'ouverture latérale d'accès 10 du capot 4.

Le plateau 8 est alors mis en rotation autour de l'axe longitudinal I-I selon un demi-tour. On amène ainsi le socle de posage 15 en correspondance, selon la deuxième direction radiale IX-IX, de l'ouverture de communication 11. De son côté, le socle de posage 16 devient accessible à travers l'ouverture latérale d'accès 10 du capot 4 en prenant la place à laquelle était précédemment disposé le socle de posage 15.

Lors de la rotation du plateau 8, l'ouverture latérale d'accès 10, vue selon la première direction radiale II-II, est en permanence obstruée, de part et d'autre de l'axe longitudinal I-I, par au moins une desdites quatre parois radiales 12a à 12d, de façon à piéger et confiner dans le capot 4 le rayonnement ionisant qui pourrait sortir du caisson 3 dans la cavité intérieure 9 (via l'ouverture de communication 11). La partie de rayonnement ionisant qui parvient dans le capot 4 ne peut au pire passer par l'ouverture latérale d'accès 10 que par un certain nombre de ricochets (par absorption et réémission) sur les parois (latérale 5, supérieure 6, et inférieure 7) du capot 4 et sur les parois radiales 12a à 12d et est en conséquence suffisamment atténuée pour ne pas présenter un caractère dangereux pour l'opérateur.

Les moyens de déplacement 28 sont alors pilotés de façon à détacher du plateau 8 le socle de posage 15 et à le déplacer (ainsi que le premier objet 26) dans le caisson 3 à travers l'ouverture de communication 11.

En pratique, les moyens de déplacement 28 viennent retirer le socle de posage 15 du plateau 8 par un déplacement radial illustré par la flèche 29a, pour amener le socle de posage 15 (et le premier objet 26 qu'il porte) à travers l'ouverture de communication 11, puis le disposent entre la source 2 et l'écran 200, dans le rayonnement ionisant généré par la source 2. Si nécessaire, les moyens de déplacement 28 rapprochent le socle de posage 15 ou 16 (et l'objet qu'il porte) de la source 2 ou de l'écran 200 (selon l'agrandissement souhaité de l'objet sur l'image) au moyen de déplacements illustrés par les flèches 30a et 30b.

Les moyens de déplacement 28 peuvent être aptes à entraîner en rotation les socles de posage 15 ou 16 autour d'une direction X-X parallèle à l'axe longitudinal I-I.

Après contrôle du premier objet 26, les moyens de déplacement 28 ramènent le socle de posage 15 sur le plateau 8 en le faisant passer à travers l'ouverture de communication 11 par un déplacement radial illustré par la flèche 29b. Le plateau 8 est alors à nouveau mis en rotation autour de l'axe longitudinal I-I selon un demi-tour. On amène ainsi le socle de posage 16 portant le deuxième objet 27 en correspondance de l'ouverture de communication 11 selon la deuxième direction radiale IX-IX, tandis que le socle de posage 15 prend la place à laquelle était précédemment disposé le socle de posage 16, le premier objet 26 devenant accessible à travers l'ouverture latérale d'accès 10 du capot 4.

Lors de cette rotation, la source 2 de rayonnement reste en fonctionnement, mais l'opérateur reste en permanence protégé.

Le premier objet 26 est ensuite extrait de la cavité intérieure 9 par l'opérateur. Si son contrôle s'est révélé satisfaisant, le premier objet 26 est conservé. Dans la négative, le premier objet 26 est mis au rebut.

La deuxième variante du deuxième mode de réalisation illustrée sur les figures 20 et 21 est similaire à la première variante du deuxième mode de réalisation.

Dans la deuxième variante du deuxième mode de réalisation, illustrée sur les figures 20 et 21, le plateau 8 comporte également deux secteurs angulaires 13a et 13c, en opposition l'un de l'autre, qui comportent chacun un socle de posage 150 ou 160. Les socles de posage 150 et 160 peuvent être inséparables du plateau 8.

La source 2 de rayonnement ionisant émet son rayonnement selon un faisceau d'émission 31 situé, selon l'axe longitudinal I-I, au moins en partie en correspondance d'une portion 80 du plateau 8. Sur les figures 20 et 21, le faisceau d'émission 31 a une forme conique, comme c'est par exemple le cas avec une source 2 de rayons X.

Un tel agencement permet d'obtenir une image des premier et deuxième objets 26 et 27 à contrôler sur l'écran 200 sans avoir à les retirer du plateau 8, ce qui permet un gain de temps et simplifie la structure du dispositif de contrôle 1 puisqu'il n'y a pas besoin des moyens de déplacement 28 prévus dans la première variante du deuxième mode de réalisation.

Le fonctionnement de la deuxième variante du deuxième mode de réalisation est très similaire à celui de la première variante du deuxième mode de réalisation, sauf que les socles de posage 150 et 160 restent sur le plateau 8.

A noter qu'on peut prévoir des moyens d'entraînement en rotation, aptes à entraîner en rotation les socles de posage 150 et 160 autour de directions XI-XI et XII-XII parallèles à l'axe longitudinal I-I.

Dans le dispositif de contrôle 1 de la figure 20 :
- le plateau 8 présente un diamètre de 525 mm environ ;
- les secteurs angulaires 13a et 13c respectivement définis par les parois radiales 12a et 12d d'une part, et 12b et 12c d'autre part sont de 115° environ, tandis que les secteurs angulaires 13b et 13d sont de 65° environ ;
- la paroi latérale 5 présente un diamètre intérieur de 535 mm environ et une hauteur selon l'axe longitudinal I-I de 290 mm environ, et se développe selon deux secteurs angulaires de 105° environ autour de l'axe longitudinal I-I ;
- l'ouverture latérale d'accès 10 se développe selon un secteur angulaire de 30° environ autour de l'axe longitudinal I-I ;
- l'ouverture de communication 11 est diamétralement opposée à l'ouverture latérale d'accès 10 par rapport à l'axe longitudinal I-I et se développe selon un secteur angulaire de 120° environ autour de l'axe longitudinal I-I.

Les dispositifs selon la présente invention se sont avérés très productifs, tout en assurant une bonne protection des opérateurs, pour le contrôle par tomographie aux rayons X de bouteilles en verre juste après moulage afin de contrôler notamment :
- la forme et les dimensions des bouteilles,
- la présence ou l'absence de défauts dans le verre.

En particulier, le temps de cycle pour le contrôle d'une bouteille a pu être réduit à environ une minute, et parfois moins.

Dans tous les modes de réalisation de l'invention, la source 2 de rayonnement ionisant peut être mobile dans le caisson 3, en étant déplaçable selon un à plusieurs axes (en translation et/ou en rotation).

La présente invention n'est pas limitée aux modes de réalisation qui ont été explicitement décrits, mais elle en inclut les diverses variantes et généralisations contenues dans le domaine des revendications ci-après.

## Revendications

1. Dispositif de contrôle (1) non destructif par rayonnement ionisant, comprenant :
- une source (2) de rayonnement ionisant, émettant un rayonnement ionisant dans un caisson (3) à parois (3a-3f) aptes à confiner au moins partiellement ledit rayonnement ionisant,
- un capot (4) s'étendant le long d'un axe longitudinal (I-I), présentant une section transversale sensiblement circulaire centrée sur l'axe longitudinal (I-I), et comprenant une paroi latérale (5), une paroi supérieure (6) et/ou une paroi inférieure (7) aptes à confiner au moins partiellement ledit rayonnement ionisant,
- un plateau (8) sous forme de disque, rotatif autour de l'axe longitudinal (I-I) dans le capot (4), une cavité intérieure (9) étant définie entre le plateau (8), la paroi latérale (5) et les parois supérieure (6) et inférieure (7) du capot (4),
**caractérisé en ce qu'**il comporte :
- une ouverture latérale d'accès (10), ménagée dans la paroi latérale (5) du capot (4) et procurant un accès à la cavité intérieure (9) selon une première direction radiale (II-II),
- une ouverture de communication (11) entre le caisson (3) contenant la source (2) de rayonnement ionisant et la cavité intérieure (9), disposée de façon sensiblement diamétralement opposée à l'ouverture latérale d'accès (10) par rapport à l'axe longitudinal (I-I),
- au moins quatre parois radiales (12a-12d), solidaires du plateau (8) et s'étendant respectivement depuis le plateau (8) selon l'axe longitudinal (I-I) et selon des directions radiales (III-III, IV-IV, V-V, VI-VI) respectives, définissant entre elles au moins quatre secteurs angulaires (13a-13d) de plateau (8), lesdites parois radiales (12a-12d) comportant un matériau apte à absorber au moins partiellement le rayonnement ionisant,
dans lequel les parois radiales (12a-12d), l'ouverture latérale d'accès (10) et l'ouverture de communication (11) sont agencées de façon que le passage entre l'ouverture latérale d'accès (10) et l'ouverture de communication (11) est obstrué par lesdites parois radiales (12a-12d) quelle que soit la position angulaire du plateau (8) autour de l'axe longitudinal (I-I).

2. Dispositif de contrôle (1) selon la revendication 1, **caractérisé en ce que** :
- le caisson (3) est situé à l'écart du plateau (8) selon l'axe longitudinal (I-I),
- l'ouverture de communication (11) comprend un trou traversant réalisé dans une paroi du caisson (3),
- le plateau (8) comporte au moins deux secteurs angulaires (13a, 13c), en opposition l'un de l'autre, qui comportent chacun un socle de posage (15, 16) rapporté de façon détachable dans une lumière (17, 18) ménagée dans le secteur angulaire (13a, 13c) de plateau (8) et disposé de façon à venir en correspondance dudit trou traversant par rotation du plateau (8) autour de l'axe longitudinal (I-I),
- il comporte des moyens de convoyage (19), aptes à détacher du plateau (8) les socles de posage (15, 16) et à déplacer les socles de posage (15, 16), selon une direction (VIII-VIII) parallèle à l'axe longitudinal (I-I) pour les amener dans le caisson (3) à travers ledit trou traversant.

3. Dispositif de contrôle (1) selon la revendication 2, **caractérisé en ce que** les moyens de convoyage (19) sont aptes à entraîner en rotation les socles de posage (15, 16) autour de la direction (VIII-VIII) parallèle à l'axe longitudinal (I-I).

4. Dispositif de contrôle (1) selon l'une des revendications 2 ou 3, **caractérisé en ce que** :
- chaque socle de posage (15, 16) comporte une section transversale non circulaire,
- chaque lumière (17, 18) ménagée dans le secteur angulaire (13a, 13c) de plateau (8) présente une section transversale non circulaire sensiblement complémentaire à celle du socle de posage (15, 16),
- les sections transversales du socle de posage (15, 16) et de la lumière (17, 18) correspondante sont conformées de telle sorte que, dans un plan (P) sensiblement perpendiculaire à l'axe longitudinal I-I :
a. dans au moins une première orientation angulaire du socle (15, 16) par rapport à la lumière (17, 18), le socle (15, 16) ne peut pas traverser le plateau (8) via la lumière (17, 18) par un mouvement de translation selon l'axe longitudinal (I-I),
b. dans au moins une deuxième orientation angulaire du socle (15, 16) par rapport à la lumière (17, 18), le socle (15, 16) peut traverser le plateau (8) via la lumière (17, 18) par un mouvement de translation selon l'axe longitudinal (I-I).

5. Dispositif de contrôle (1) selon la revendication 1, **caractérisé en ce que** :
- la source (2) de rayonnement ionisant émet son rayonnement selon un axe d'émission (VII-VII) situé, selon l'axe longitudinal (I-I), entre le plateau (8) et la paroi supérieure (6) du capot (4),
- l'ouverture de communication (11) comprend un trou traversant ménagé dans la paroi latérale (5) du capot (4) et procurant un accès à la cavité intérieure (9) selon une deuxième direction radiale (IX-IX).

6. Dispositif de contrôle (1) selon la revendication 5, **caractérisé en ce que** la source (2) de rayonnement ionisant émet son rayonnement selon un axe d'émission (VII-VII) sensiblement perpendiculaire à la deuxième direction radiale (IX-IX).

7. Dispositif de contrôle (1) selon l'une des revendications 5 ou 6, **caractérisé en ce que** :
- le plateau (8) comporte au moins deux secteurs angulaires (13a, 13c), en opposition l'un de l'autre, qui comportent chacun un socle de posage (15, 16),
- il comporte des moyens de déplacement (28), aptes à déplacer les socles de posage (15, 16) à l'écart de l'axe longitudinal (I-I) pour les amener dans le caisson (3) à travers le trou traversant ménagé dans la paroi latérale (5) du capot (4).

8. Dispositif de contrôle (1) selon la revendication 7, **caractérisé en ce que** les moyens de déplacement (28) sont aptes à entraîner en rotation les socles de posage (15, 16) autour d'une direction (X-X) parallèle à l'axe longitudinal (I-I).

9. Dispositif de contrôle (1) selon les revendications 5 ou 6, **caractérisé en ce que** :
- la source (2) de rayonnement ionisant émet son rayonnement selon un faisceau d'émission (31) situé, selon l'axe longitudinal (I-I), au moins en partie en correspondance d'une portion (80) du plateau (8),
- le plateau (8) comporte au moins deux secteurs angulaires (13a, 13c), en opposition l'un de l'autre, qui comportent chacun un socle de posage (15, 16).

10. Dispositif de contrôle (1) selon la revendication 9, **caractérisé en ce qu'**il comporte des moyens d'entraînement en rotation, aptes à entraîner en rotation les socles de posage (15, 16) autour d'une direction (XI-XI, XII-XII) parallèle à l'axe longitudinal (I-I).

11. Dispositif de contrôle (1) selon l'une quelconque des revendications 1 à 10, **caractérisé en ce que** la source (2) de rayonnement ionisant émet des rayons X.

12. Dispositif de contrôle (1) selon l'une quelconque des revendications 1 à 11, **caractérisé en ce que** la source (2) de rayonnement ionisant est mobile dans le caisson (3).

13. Utilisation d'un dispositif de contrôle (1) selon l'une quelconque des revendications 1 à 12 pour le contrôle d'objets (26, 27) en verre, de préférence par tomographie.

14. Utilisation selon la revendication 13 dans laquelle les objets (26, 27) en verre sont des conteneurs creux, de préférence des bouteilles.

15. Utilisation d'un dispositif de contrôle (1) selon l'une des revendications 2 ou 7, **caractérisée en ce qu'**on réalise des images d'un objet à contrôler (26, 27) reposant sur un socle de posage (15, 16) pendant que ledit socle de posage (15, 16) est amené dans le caisson (3).

## Patentansprüche

1. Vorrichtung (1) für zerstörungsfreie Prüfung durch ionisierende Strahlung, welche umfasst:
- eine Quelle (2) mit ionisierender Strahlung, die ionisierende Strahlung in einem Kasten (3) mit Wänden (3a-3f) emittiert, der in der Lage ist, besagte ionisierende Strahlung mindestens teilweise einzuschließen,
- eine Haube (4), die sich entlang einer Längsachse (I-I) erstreckt und einen im Wesentlichen kreisförmigen auf der Längsachse (I-I) zentrierten Querschnitt präsentiert, und eine seitliche Wand (5), eine obere Wand (6) und/oder eine untere Wand (7) umfasst, die in der Lage sind, besagte ionisierende Strahlung mindestens teilweise einzuschließen,
- eine in der Haube (4) um die Längsachse (I-I) rotierbare Platte (8) in Form einer Scheibe, wobei zwischen der Platte (8), der seitlichen Wand (5), den oberen (6) und unteren (7) Wandungen der Haube (4) ein innerer Hohlraum (9) definiert ist,
**dadurch gekennzeichnet, dass** sie aufweist:
- eine seitliche Zugangsöffnung (10), die in der seitlichen Wand (5) der Haube (4) ausgebildet ist und den Zugang zum inneren Hohlraum (9) entlang einer ersten radialen Richtung (II-II) bereitstellt,
- eine Kommunikationsöffnung (11) zwischen dem die Quelle (2) mit ionisierender Strahlung enthaltenden Kasten (3) und dem inneren Hohlraum (9), angeordnet in Bezug auf die Längsachse (I-I) im Wesentlichen diametral entgegengesetzt zu der seitlichen Zugangsöffnung (10),
- mindestens vier mit der Platte (8) fest verbundene radiale Wände (12a-12d), die sich jeweils entlang der Längsachse (I-I) von der Platte (8) und in jeweiligen radialen Richtungen (III-III, IV-IV, V-V, VI-VI) erstrecken, die zwischen sich mindestens vier Winkelsektoren (13a-13d) der Platte (8) definieren, wobei besagte radiale Wände (12a-12d) ein Material aufweisen, das in der Lage ist, ionisierende Strahlung mindestens teilweise zu absorbieren,
wobei die radialen Wände (12a-12d), die seitliche Zugangsöffnung (10) und die Kommunikationsöffnung (11), in einer Weise zusammengesetzt sind, dass die Passage zwischen der seitlichen Zugangsöffnung (10) und der Kommunikationsöffnung (11) mittels der besagten radialen Wände (12a-12d) unabhängig von der Winkelstellung der Platte (8) um die Längsachse (I-I) blockiert ist.

2. Prüfungsvorrichtung (1) nach Anspruch 1, **dadurch gekennzeichnet, dass**:
- der Kasten (3) entlang der Längsachse (I-I) entfernt von der Platte (8) angeordnet ist,
- die Kommunikationsöffnung (11) ein Durchgangsloch umfasst, das in einer Wand des Kastens (3) realisiert ist,
- die Platte (8) mindestens zwei einander gegenüberstehende Winkelsektoren (13a, 13c) aufweist, die jeder einen Montagesockel (15, 16) aufweisen, der in einer Weise lösbar in einem, in dem Winkelsektor (13a, 13c) der Platte (8) gebildeten, Kanal (17, 18) angebracht ist, der in einer Weise angeordnet ist, dass er durch Rotation der Platte (8) um die Längsachse (I-I) mit besagtem Durchgangsloch in Übereinstimmung kommt,
- sie Fördermittel (19) aufweist, die in der Lage sind, die Montagesockel (15, 16) von der Platte (8) zu lösen und die Montagesockel (15, 16) entlang einer Richtung (VIII-VIII) parallel zu der Längsachse (I-I) zu bewegen, um sie durch besagtes Durchgangsloch in den Kasten (3) zu führen.

3. Prüfungsvorrichtung (1) nach Anspruch 2, **dadurch gekennzeichnet, dass** die Fördermittel (19) in der Lage sind, die Montagesockel (15, 16) in Rotation um die Richtung (VIII-VIII) zu versetzen, die parallel zur Längsachse (I-I) ist.

4. Prüfungsvorrichtung (1) nach einem der Ansprüche 2 oder 3, **dadurch gekennzeichnet, dass**:
- jeder Montagesockel (15, 16) einen nicht kreisförmigen Querschnitt aufweist,
- jeder im Winkelsektor (13a, 13c) der Platte (8) ausgebildete Kanal (17, 18) einen nicht kreisförmigen Querschnitt präsentiert, der im Wesentlichen komplementär zu dem des Montagesockels (15, 16) ist,
- die Querschnitte des Montagesockels (15, 16) und der korrespondierenden Kanäle (17, 18) so geformt sind, dass in einer zu der Längsachse I-I im Wesentlichen senkrechten Ebene (P):
a. der Sockel (15, 16) in mindestens einer ersten Winkelausrichtung des Sockels (15, 16) relativ zu dem Kanal (17, 18), nicht mittels einer translatorischen Bewegung via den Kanal (17, 18) entlang der Längsachse (I-I) durch die Platte (8) gelangen kann,
b. der Sockel (15, 16) in mindestens einer zweiten Winkelausrichtung des Sockels (15, 16) relativ zu dem Kanal (17, 18), mittels einer translatorischen Bewegung via den Kanal (17, 18) entlang der Längsachse (I-I) durch die Platte (8) gelangen kann.

5. Prüfungsvorrichtung (1) nach Anspruch 1, **dadurch gekennzeichnet, dass**:
- die Quelle (2) mit ionisierender Strahlung ihre Strahlung entlang einer Emissionsachse (VII-VII) emittiert, die, entlang der Längsachse (I-I), zwischen der Platte (8) und der oberen Wand (6) der Haube (4) angeordnet ist,
- die Kommunikationsöffnung (11) ein Durchgangsloch umfasst, das in der seitlichen Wand (5) der Haube (4) ausgebildet ist und den Zugang zum inneren Hohlraum (9) in einer zweiten radialen Richtung (IX-IX) bereitstellt.

6. Prüfungsvorrichtung (1) nach Anspruch 5, **dadurch gekennzeichnet, dass** die Quelle (2) mit ionisierender Strahlung ihre Strahlung entlang einer Emissionsachse (VII-VII) emittiert, die im Wesentlichen senkrecht zur zweiten radialen Richtung (IX-IX) ist.

7. Prüfungsvorrichtung (1) nach einem der Ansprüche 5 oder 6, **dadurch gekennzeichnet, dass**:
- die Platte (8) mindestens zwei einander gegenüberliegende Winkelsektoren (13a, 13c) aufweist, die jeder einen Montagesockel (15, 16) aufweisen,
- sie Bewegungsmittel (28) aufweist, die in der Lage sind, die Montagesockel (15, 16) weg von der Längsachse (I-I) zu bewegen, um sie in den Kasten (3) durch das in der seitlichen Wand (5) ausgebildete Durchgangsloch, aus der Haube (4) zu führen.

8. Prüfungsvorrichtung (1) nach Anspruch 7, **dadurch gekennzeichnet, dass** die Bewegungsmittel (28) in der Lage sind, die Montagesockel (15, 16) in Rotation um eine Richtung (X-X) zu versetzen, die parallel zur Längsachse (I-I) ist.

9. Prüfungsvorrichtung (1) nach Anspruch 5 oder 6, **dadurch gekennzeichnet, dass**:
- die Quelle (2) mit ionisierender Strahlung ihre Strahlung entlang eines Emissionsstrahls (31) emittiert, der angeordnet ist, entlang der Längsachse (I-I), mindestens teilweise in Übereinstimmung mit einem Teil (80) der Platte (8) gebracht zu werden,
- die Platte (8) mindestens zwei einander gegenüberliegende Winkelsektoren (13a, 13c) aufweist, die jeder einen Montagesockel (15, 16) aufweisen.

10. Prüfungsvorrichtung (1) nach Anspruch 9, **dadurch gekennzeichnet, dass** sie Mittel zum Versetzen in Rotation aufweist, die in der Lage sind, die Montagesockel (15, 16) in Rotation um eine Richtung (XI-XI, XII-XII) zu versetzen, die parallel zur Längsachse (I-I) ist.

11. Prüfungsvorrichtung (1) nach einem der Ansprüche 1 bis 10, **dadurch gekennzeichnet, dass** die Quelle (2) mit ionisierender Strahlung X-Strahlen emittiert.

12. Prüfungsvorrichtung (1) nach einem der Ansprüche 1 bis 11, **dadurch gekennzeichnet, dass** die Quelle (2) mit ionisierender Strahlung im Kasten (3) mobil ist.

13. Verwendung einer Prüfungsvorrichtung (1) nach einem der Ansprüche 1 bis 12 zum Prüfen von Objekten (26, 27) aus Glas, vorzugsweise mittels Tomographie.

14. Verwendung nach Anspruch 13, wobei die Objekte (26, 27) aus Glas hohle Behälter, vorzugsweise Flaschen, sind.

15. Verwendung einer Prüfungsvorrichtung (1) nach einem der Ansprüche 2 oder 7, **dadurch gekennzeichnet, dass** Bilder eines Objekts (26, 27) zum Prüfen realisiert werden, das auf einem Montagesockel (15, 16) ruht, während besagter Montagesockel (15, 16) in den Kasten (3) geführt wird.

## Claims

1. Device (1) for non-destructive testing using ionizing radiation, comprising:
- a source (2) of ionizing radiation, emitting ionizing radiation into a box (3) with walls (3a-3f) that are able to at least partially confine said ionizing radiation,
- a cover (4) extending along a longitudinal axis (I-I), having a substantially circular cross section that is centred on the longitudinal axis (I-I), and comprising a lateral wall (5), an upper wall (6) and/or a lower wall (7) that are able to at least partially confine said ionizing radiation,
- a plate (8) in the form of a disc, which is able to rotate about the longitudinal axis (I-I) in the cover (4), an inner cavity (9) being defined between the plate (8), the lateral wall (5) and the upper wall (6) and lower wall (7) of the cover (4),
**characterized in that** it has:
- a lateral access opening (10), provided in the lateral wall (5) of the cover (4) and affording access to the inner cavity (9) in a first radial direction (II-II),
- a communication opening (11) between the box (3) containing the source (2) of ionizing radiation and the inner cavity (9), disposed substantially diametrically opposite the lateral access opening (10) with respect to the longitudinal axis (I-I), - at least four radial walls (12a-12d), as one with the plate (8) and extending respectively from the plate (8) along the longitudinal axis (I-I) and in respective radial directions (III-III, IV-IV, V-V, VI-VI), defining between one another at least four angular sectors (13a-13d) of the plate (8), said radial walls (12a-12d) having a material that is able to at least partially absorb the ionizing radiation,
wherein the radial walls (12a-12d), the lateral access opening (10) and the communication opening (11) are arranged such that the passage between the lateral access opening (10) and the communication opening (11) is obstructed by said radial walls (12a-12d) regardless of the angular position of the plate (8) about the longitudinal axis (I-I).

2. Testing device (1) according to Claim 1, **characterized in that**:
- the box (3) is situated away from the plate (8) along the longitudinal axis (I-I),
- the communication opening (11) comprises a through-hole made in a wall of the box (3),
- the plate (8) has at least two angular sectors (13a, 13c), in opposition to one another, which each have a placement stage (15, 16) that is attached in a detachable manner in an aperture (17, 18) provided in the angular sector (13a, 13c) of the plate (8) and is disposed so as to come into line with said through-hole by rotation of the plate (8) about the longitudinal axis (I-I),
- it has conveying means (19), which are able to detach the placement stages (15, 16) from the plate (8) and to move the placement stages (15, 16), in a direction (VIII-VIII) parallel to the longitudinal axis (I-I) so as to bring them into the box (3) through said through-hole.

3. Testing device (1) according to Claim 2, **characterized in that** the conveying means (19) are able to drive the placement stages (15, 16) in rotation about the direction (VIII-VIII) parallel to the longitudinal axis (I-I).

4. Testing device (1) according to either of Claims 2 and 3, **characterized in that**:
- each placement stage (15, 16) has a non-circular cross section,
- each aperture (17, 18) provided in the angular sector (13a, 13c) of the plate (8) has a non-circular cross section substantially complementary to that of the placement stage (15, 16),
- the cross sections of the placement stage (15, 16) and of the corresponding aperture (17, 18) are shaped such that, in a plane (P) substantially perpendicular to the longitudinal axis I-I:
a. in at least a first angular orientation of the stage (15, 16) with respect to the aperture (17, 18), the stage (15, 16) cannot pass through the plate (8) via the aperture (17, 18) through a translational movement along the longitudinal axis (I-I),
b. in at least a second angular orientation of the stage (15, 16) with respect to the aperture (17, 18), the stage (15, 16) can pass through the plate (8) via the aperture (17, 18) through a translational movement along the longitudinal axis (I-I).

5. Testing device (1) according to Claim 1, **characterized in that**:
- the source (2) of ionizing radiation emits its radiation along an emission axis (VII-VII) situated, along the longitudinal axis (I-I), between the plate (8) and the upper wall (6) of the cover (4),
- the communication opening (11) comprises a through-hole provided in the lateral wall (5) of the cover (4) and affording access to the inner cavity (9) in a second radial direction (IX-IX).

6. Testing device (1) according to Claim 5, **characterized in that** the source (2) of ionizing radiation emits its radiation along an emission axis (VII-VII) substantially perpendicular to the second radial direction (IX-IX).

7. Testing device (1) according to either of Claims 5 and 6, **characterized in that**:
- the plate (8) has at least two angular sectors (13a, 13c), in opposition to one another, which each have a placement stage (15, 16),
- it has movement means (28), which are able to move the placement stages (15, 16) away from the longitudinal axis (I-I) so as to bring them into the box (3) through the through-hole provided in the lateral wall (5) of the cover (4).

8. Testing device (1) according to Claim 7, **characterized in that** the movement means (28) are able to drive the placement stages (15, 16) in rotation about a direction (X-X) parallel to the longitudinal axis (I-I).

9. Testing device (1) according to Claim 5 or 6, **characterized in that**:
- the source (2) of ionizing radiation emits its radiation in an emission beam (31) situated, along the longitudinal axis (I-I), at least partially in line with a portion (80) of the plate (8),
- the plate (8) has at least two angular sectors (13a, 13c), in opposition to one another, which each have a placement stage (15, 16).

10. Testing device (1) according to Claim 9, **characterized in that** it has rotational-drive means, which are able to drive the placement stages (15, 16) in rotation about a direction (XI-XI, XII-XII) parallel to the longitudinal axis (I-I).

11. Testing device (1) according to any one of Claims 1 to 10, **characterized in that** the source (2) of ionizing radiation emits X-rays.

12. Testing device (1) according to any one of Claims 1 to 11, **characterized in that** the source (2) of ionizing radiation is able to move in the box (3).

13. Use of a testing device (1) according to any one of Claims 1 to 12 for testing glass objects (26, 27), preferably using tomography.

14. Use according to Claim 13 wherein the glass objects (26, 27) are hollow containers, preferably bottles.

15. Use of a testing device (1) according to either of Claims 2 and 7, **characterized in that** images are produced of an object to be tested (26, 27) that rests on a placement stage (15, 16) while said placement stage (15, 16) is brought into the box (3).
